# EUROPEAN PATENT SPECIFICATION

(11) **EP 4 530 508 B1**
(45) Date of publication and mention of the grant of the patent: **25.02.2026**
(21) Application number: 23382982.9
(22) Date of filing: 27.09.2023
(51) Int. Cl.: F16K 7/06

(54) **PROPORTIONAL VALVE FOR REGULATING FLUID FLOW**
PROPORTIONALVENTIL ZUR REGELUNG DES DURCHFLUSSES EINES FLUIDS
SOUPAPE PROPORTIONNELLE POUR RÉGULER UN ÉCOULEMENT DE FLUIDE

(43) Date of publication of application: 02.04.2025
(73) Proprietor: Lamela Garrido, Jose Francisco, 29014 Malaga (ES)
(72) Inventor: Lamela Garrido, Jose Francisco, 29014 Malaga (ES)
(74) Representative: Isern Patentes y Marcas S.L.

(56) References cited:
- JP-A- 2011 131 152
- JP-U- S5 891 066
- US-A- 5 707 038
- US-A1- 2005 053 501

## Description

### TECHNICAL FIELD

The present invention relates to the technical sector of valves intended to regulate or control fluid circulation. More specifically, the invention relates to a 4-way, 3-position, proportional, directional valve assembly with complementary accessories that are required for its assembly and for fluid distribution.

### BACKGROUND OF THE INVENTION

Directional control valves are those responsible for changing the direction of flow of a fluid (whether gas or liquid) that can be conducted towards actuation cylinders, pneumatic clamps and, in general, for any circuit in which it is required to introduce/extract said fluid in successive operating cycles to transform hydraulic/pneumatic energy into linear movements, more specifically, double-acting tools and cylinders.

Specifically, 4-way valves have 4 ports, which can be named by the function that each port implements or by the system component connected thereto: pressure port (to which the fluid supply source is connected, with a set pressure), advance port (port that causes the movement of the mechanism controlled by the valve in one direction), retraction or recoil port (which causes the movement of said mechanism in the opposite direction to that of advance) and tank port (from which the fluid already "used" in the actuation of the controlled mechanism comes out, for recycling or storage thereof).

In this sense, valves are known in which fluid flow control is obtained by deformation of a conduit through which said fluid circulates, such that this deformation causes a closure or opening of the passage section of the corresponding conduit. In many of these cases, the deformation of said tube is produced by the action of an ad-hoc mechanism, i.e., specifically intended or suited to achieve that deformation.

US5707038A discloses a three way valve with bendable flexible conduits adapted to a fluid powered robotic actuator.

### GENERAL DESCRIPTION

The present invention provides a proportional directional valve for regulating fluid flow.

The valve comprises several conduits, these conduits being characterised in that they can be folded, forming a constriction that limits or completely cuts off fluid flow, and can be unfolded or extended, at least partially, to allow fluid to flow therethrough. These folding and unfolding actions of the conduits are carried out in a controlled manner to obtain an adequate flow rate, which depends proportionally on how much the conduits are folded or unfolded. Therefore, the valve is proportional.

The valve further comprises various connectors that connect the conduits to each other, each connector interconnecting two independent conduits, forming a circuit through which the fluid or different fluids move. These connectors are designed to enable the input of pressurised fluid and the output of pressurised fluid, wherein the output fluid may be the same one that entered or a different one.

The connectors are also intended to be moved, so that, when moving one of said connectors, two conduits are unfolded at least partially, thereby moving at the same time the connectors associated with said unfolded conduits, which enables fluid to move through the same, wherein one of the unfolded conduits is coupled to the connector that has been initially moved, while the other of the unfolded conduits is coupled to a connector that remains essentially static. Therefore, the output of pressurised fluid is carried out through one of the connectors linked to one of the unfolded conduits, and the input of pressurised fluid through the other one of said connectors linked to the other one of the unfolded conduits, and properly conducting both the input pressure and the output pressure.

According to the invention, the valve comprises four conduits coupled by four connectors, each connector coupling two independent conduits, where the conduits comprise an input connector intended to enable the input of a pressurised fluid and an output connector that enables the output of a pressurised fluid, a first transfer connector and a second transfer connector. Thus, in a rest position of the valve, the conduits are folded, therefore, there is no fluid movement. However, when the output connector is moved, depending on the direction of movement, one of the conduits coupled to said output connector is unfolded, at least partially, enabling fluid to flow between the first transfer connector or the second transfer connector and said output connector. At the same time, this movement generates the unfolding of one of the conduits associated with the input connector, where this input connector remains essentially immobile, enabling fluid to move between the first transfer connector or the second transfer connector, depending on the movement of the output connector, and said input connector. Therefore, when the output connector moves, fluid pressure at the inlet of the input connector is conducted towards the first transfer connector or the second transfer connector, whereas if, for example, there is an input pressure in the first transfer connector or the second transfer connector, this input pressure will be conducted towards the output connector.

This arrangement makes it possible to control, for example, double-acting actuators. Thus the first transfer connector is connected to the lower input of said actuator, while the second transfer connector is connected to the upper input of the actuator. When the output connector is moved in the direction in which the first transfer connector is located, the conduit connecting said first transfer connector and the input connector is unfolded and, depending on how much the output connector is moved, sets the amount of fluid that flows from the input connector to the first transfer connector, causing the piston of the actuator to rise at a speed proportional to the unfolding of the conduit. While the actuator raises its piston, it pushes the fluid existing in the upper chamber of its body and this will be conducted towards the second transfer connector, the valve being introduced. This fluid that is introduced looking for an output towards the input connector cannot circulate because the conduit is folded and obstructs the path of the fluid, so it will be conducted towards the output connector that is now enabled since the associated conduit is unfolded, coming out through said output conduit, normally going to a tank.

The valve also comprises actuation means configured to controllably move at least one of the connectors. In this sense, one of the connectors, for example the input connector, must remain static so that the other connectors, in particular the output connector, are moved relative to the input connector, causing the unfolding of the corresponding conduits.

In relation to the above, the actuation means comprise a servomotor. This servomotor has a movable portion that connects to a connector, for example, to the output connector, and a fixed portion that connects to the input connector, thus driving the flow in a controlled manner therethrough.

With respect to the conduits, these may have an inside passageway with a size such that, when said conduit is folded, even slightly, the inside wall of the passageway closes on itself, disabling fluid flow. The opposite occurs when unfolding the conduit starting from the folded position.

In an alternative embodiment, the coupling between the conduits and the connectors forms a four-pointed star; therefore, it has four vertexes that are facing outwards from the star (the four points) and four vertexes that are facing inwards from said star.

At this point, it should be noted that, when the similarity of the circuit making up the four-pointed star valve is used, if reference is made to movements of valve components to the left/right/down/up, these movements are understood to be defined on a plan view of said valve, in which the shape of said four-pointed star can be observed. Similarly, when referring to valve components that are opposite or contiguous, said statement is also based on the plan view of the valve: one point of the star is contiguous with two other points of the star and is opposite with respect to the fourth (also for the inside vertexes of the star).

Continuing with the description of the feature introduced in the preceding paragraph, the area of the points or vertexes of the star that faces outward is formed by each of the conduits which, in the folded or bent position, form creases that make up each one of the points. The area of the inner vertexes of the star is formed by the connectors configured to connect the ends of these conduits; i.e., each of these connectors is intended to form an angle (which makes up the inside vertex) either because said connector has the ability to fold equally or because it has a predefined inclination or angle, i.e., the ability to be a rigid connector with a specific angled shape.

The connector has two holes or accesses at the ends thereof for the connection of two of the aforementioned respective conduits that make up two contiguous points of the star, as explained above. In addition, each of the connectors has an access port, for example, for connections to an actuator of a control system of a double-acting mechanism.

The angles formed by the folded conduits, as well as those made up by the connectors are provided such that, when the valve is in the rest position, i.e., the aforementioned four-star shape, the creases or pleats of said conduits do not allow fluid to flow.

Now, as mentioned above, when a movement is applied to one of the connectors that has a component to the left with respect to the connector located in the star position opposite to that of the first, the folded conduit connected to the right end of the first connector opens (the fold or crease is smoothed) and allows fluid to flow, and the same occurs with the bent conduit opposite to this first one in the star (i.e., the bent conduit connected to the left of the second connector opposite to the first). The other two bent conduits exacerbate the folding so they continue not allowing fluid to flow. The same thing happens, symmetrically (changing right/left positions) when the movement applied to that first connector has a component to the right of the second opposite connector.

Another feature of this four-pointed star-shaped embodiment relates to the fact that, in the rest position, the creases of the conduit sections form an angle of between 20° and 28°. This is the preferred working interval to interrupt fluid flow. The most preferred value is 24°.

According to another feature of the invention, the fluid circuit can be at least double. Therefore, what until now has been called a conduit is formed by at least two conduits arranged in parallel and by at least two respective connections in each connector for said conduits. In this way, each conduit will run in parallel and will enter/come out of respective parallel connections provided in the connectors.

Preferably, in one embodiment, the valve is enabled to control a double-acting actuator.

Likewise, in another embodiment of the invention, an actuator is provided, preferably double-acting, wherein the valve of the invention is operatively coupled, being used to control said actuator.

In another embodiment it is possible to use the valve to control a single-acting actuator, or an air pocket, etc., wherein, for example, in the alternative case of four conduits and four connectors, one of said connectors is disabled, obstructing both the conduit sections before the crease or fold region of each conduit and the connector. Thus, only three connectors and three conduits would be enabled.

In this document (both in the description and in the claims) the term "valve" or "valve assembly" are used interchangeably to relate to the valve body itself with its inlets and outlets and its elements for cutting off/opening the circulating flow, either individually or assembled with the different independent elements or components that can be assembled with this valve specifically to achieve the desired functionality and that are disclosed herein (valve support, junctions, actuation means or servomotor, couplings for conduits, etc.).

According to the above, the present invention focuses on providing a directional, proportional valve, such that its own geometric and constructive configuration facilitates flow regulation merely using connection elements to be able to act on any of the access ports thereof. In other words, the valve essentially comprises conduits, access ports and attachment means for some of these ports and does not require any other mechanical element (whether actuator or actuated) beyond the motor itself belonging to the servomechanism in which the valve is to be inserted.

Furthermore, due to its operating principle, as will be explained in detail later, it is an economical device that is quick and easy to manufacture. This type of device, which could be classified within the classification of microvalves, can be suited very quickly and easily to any servo or miniature actuator mechanism. The aforementioned operating principle also provides an ability for proportionality in the amount of flow circulated with respect to the selected output of the motor or servo that controls the valve, therefore, it works as a proportional valve.

In addition, a system of connectors and distribution junctions is provided that also facilitate the distribution of the flow to other mechanisms or components that are to be involved in the design of the total system in which the valve is integrated.

### BRIEF DESCRIPTION OF THE DRAWINGS

To complement the description, a series of figures are attached that illustrate the valve assembly of the present invention. In the drawings:
Figures 1 to 3 show three schematic representations of the valve of the present invention, which are useful to explain its operation, in three respective characteristic positions of said operation.
Figures 4 to 6 show three views (respectively, front, plan and side perspective views) of one of the preferred embodiments of the valve of the present invention.
Figures 7 and 8 show two views (respectively, front and rear perspective) of the valve of Figures 4 to 6 with an actuation servomechanism.
Figure 9 is a view of a valve support that forms part of the valve assembly of the invention.
Figure 10 is a view of the valve support shown in Figure 9 illustratively attached to a cylinder.
Figure 11 is a perspective view of a coupling that is part of the valve assembly of the invention.
Figures 12 to 16 are views of different distribution junctions of the valve assembly of the present invention.

### DETAILED DESCRIPTION OF THE INVENTION

Embodiments of the invention illustrated in the figures listed above will be described in detail below.

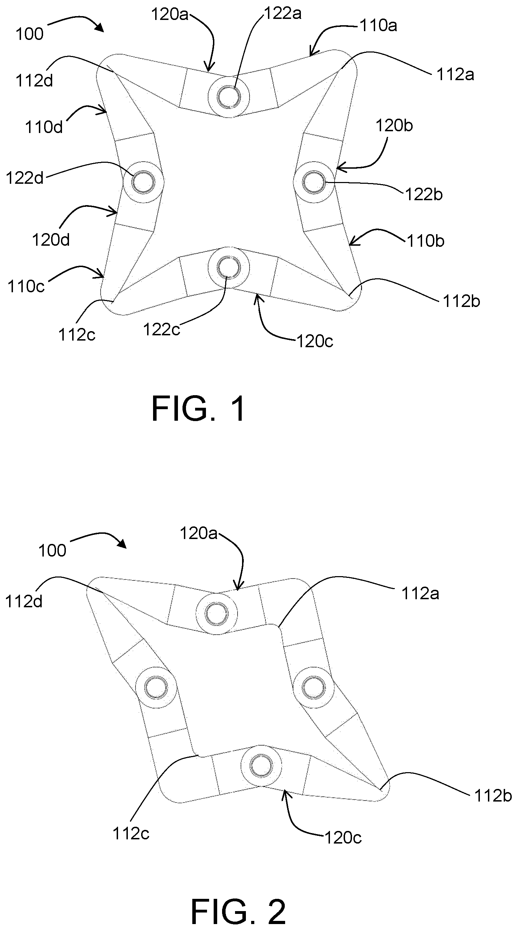

Figure 1 shows an illustrative diagram of the valve (100) of the invention. Later, when said valve (100) is shown with the elements that enable its coupling to an actuator, it is called a valve assembly, although such coupled accessory elements can also be interpreted to equally form the valve (100).

Now, in said valve (100) there are four connectors (120a-d) and four conduits (110a-d) prepared to be folded and unfolded and which, as seen in the figure, are comprised of sections interrupted by a crease, in the folded position of each conduit (120a-d).

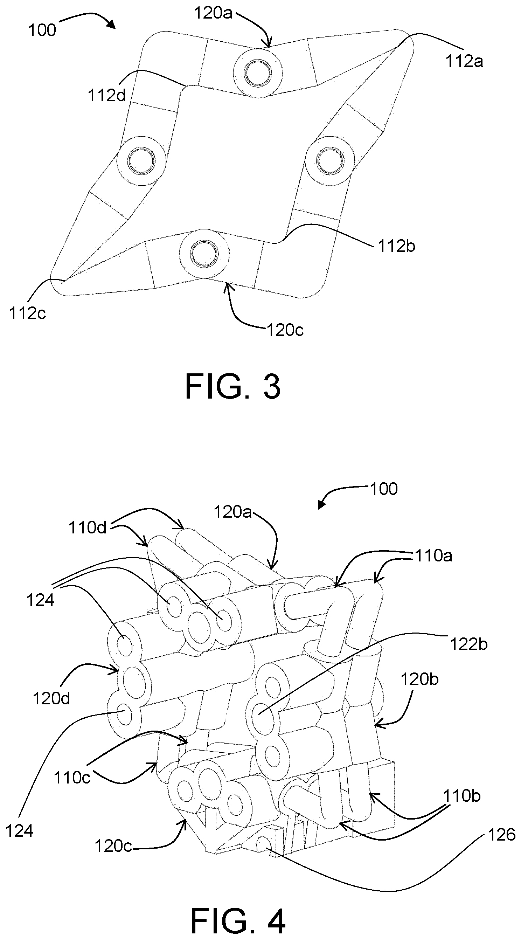

In figure 1, the valve (100) is in a rest position (without being actuated by any means) and, in said position, makes up a fluid circuit in the shape of a four-pointed star seen in plan view, as is the case of said figure 1. In the preferred embodiment, the four connectors (120a-d) are made of a material that is sufficiently rigid as to maintain their structure in the different stages that will be explained below. The conduits (110a-d), as mentioned above, have sufficient flexibility and resilience to adopt the shapes that will be described in relation to Figures 2 and 3. In addition, the four connectors (120a-d) each have an access port (122a-d) for connecting a pressure source, a fluid output and the front and rear chambers of a double-acting actuation mechanism. The conduits (110a-d) and the connectors (120a-d) are firmly connected to each other, in a sealed manner, to compose a circuit that supports the pressure of the fluid that circulates inside same. In this rest position shown in Figure 1, the conduits (110a-d) have respective creases (112a-d) that do not allow fluid to flow therethrough. These creases (112a-d) form an angle, preferably, of 24° and the angles formed by the connection outputs or accesses of each connector (120a-d) are calculated to achieve these 24° creases in the rest position.

In the preferred embodiment, this 24° angle is the best performing one (fluid cutoff in the rest position) according to the materials used to form the valve (100), but, if other materials are chosen, the value of said angle may vary, which is included within the scope of the claims. According to this specific feature, that which characterises the invention is that, in the rest position, the crease (112a-d) of each conduit section (110a-d) prevents fluid from flowing.

Another characterising aspect is that, when a movement of one of the connectors (120a-d) to the right or left with respect to the connector (120a-d) opposite to the one being moved is applied, the creases (112a-d) of two opposite corners of the star open enough to enable fluid to flow, while the other two corners will remain closed without allowing circulation therethrough. Figure 2 depicts a movement of the connector (120a) to the left with respect to its opposite (120c); in this case, it can be seen how the creases (112a) and (112c) open, allowing fluid to flow, while the creases (112b) and (112d) remain closed. In the case of Figure 3, the connector (120a) moves to the right, ensuring that the two creases (112a, 112c) that were previously open, now remain closed, while the creases (112b) and (112d) are unfolded, allowing fluid to flow. These movements to the right and left must not necessarily occur on an axis substantially parallel to the imaginary line joining the two lower corners of the star, but can have a certain vertical component, and the remaining horizontal component (left-right) will still have the same desired effect as just explained. In summary, the movement must enable fluid to flow, unfolding the conduit.

If, in the diagram of figures 1 to 3, it is considered, for example, that a fluid input with a certain pressure is connected to the input port (122c), the front and rear chambers of a double-acting actuator are connected to the ports (122b, 122d) and the corresponding output of the system is connected to the output port (122a), the following work cycles are obtained. When the upper connector (120a), output port (122a) is pushed to the left, the lower left crease (112c) opens and, depending on how much said connector (120a) is pushed, an amount of fluid that flows towards the connector (120d) is set causing the actuator to raise its piston at a speed proportional to the opening of the crease (112c); in this way, it is achieved that the valve (100) is proportional: the greater the movement, the greater the liquid or gas flow. While the actuator raises its piston, same will push the fluid existing in the rear chamber of its body and the fluid will come out through the right connector (120b) being introduced in the valve (100). This fluid that is introduced looking for an output towards the lower connector (120c), output port (122c) cannot circulate because it encounters the crease (112b) that obstructs the path of the fluid, so it attempts to do so through the upper connector (120a) which is now open and comes out normally in order to flow to a tank. It should be noted that, since the T-shaped connectors (120a-d) are symmetrically opposed to each other, when a higher level of pressure is introduced to fill the actuator, it is also achieved that the emptying system opens more so that the fluid discharges with the same intensity with which it enters the valve (100).

When the upper connector (120a), output port (122a), of the valve (100) is pushed to the right, fluid is introduced through the connector (120b) into the actuator which will cause the piston to lower and the front chamber to be emptied through the valve (100) reconducting the fluid to the tank. In short, with this valve (100), anyone who handles a normal or micro servo, whether with a servo tester, an Arduino, a micro bit or any automation or circuit capable of controlling servos available on the market, will be able to move large loads, either by means of cylinders, artificial muscles, air pockets, etc., with only the energy required to move said servos, which normally operate with a voltage of 3.6 volts or more and are usually low power. The loads that can be lifted will depend on the pressure source chosen and the power supplied by the same.

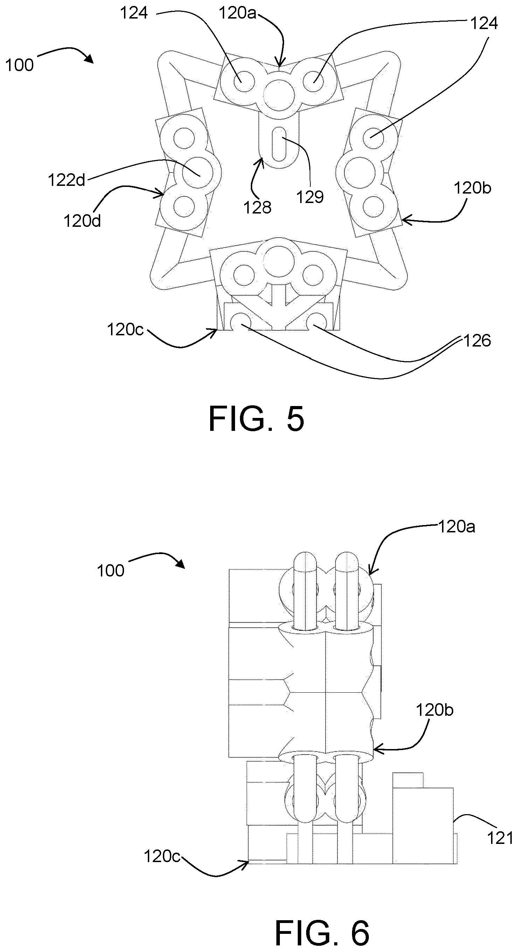

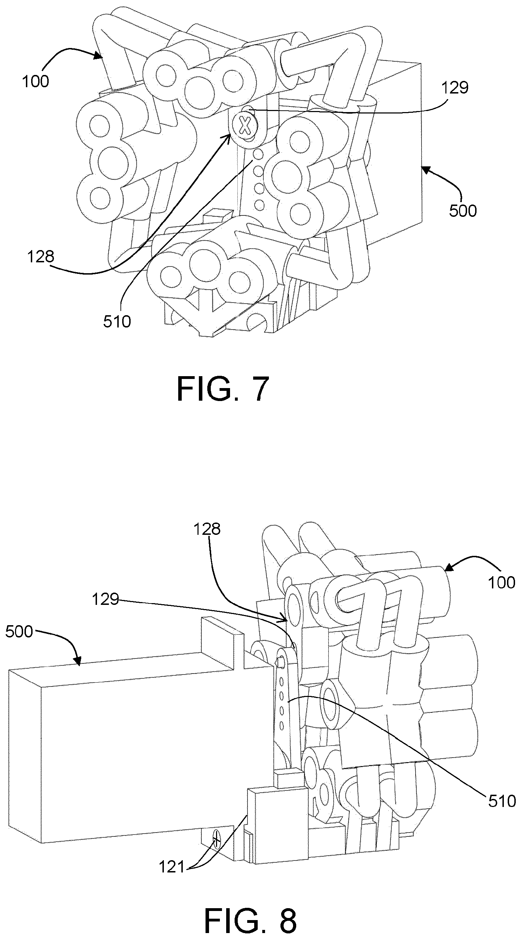

A preferred embodiment of the valve (100) of the invention is shown in Figures 4 to 6. First of all, in this embodiment a double conduit (110a-d) is used. In this way, the valve (100) is able to deliver more flow and the servomechanisms typically used in this type of device continue to be able to carry out the required movement (folding/unfolding of the tubes or conduits) for the control described above. Furthermore, in order to provide this movement of one of the connectors (120a-d) by means of a servo, attachment means are provided in the form of, for example, a tab (128) and a corresponding through hole (129), with which the corresponding connector (in this case, 120a) can be secured to a movable element (510) of a servo (500) (figures 7 and 8). The opposite connector (120c) must be kept fixed and, to this end, it may have attachment means (121) which, in this case, comprise a housing, in the form of a recess or slot, for the body of the servo (500) and a hole into which said body can be screwed (this can be better seen in figure 8). These attachment means (121) could also be provided for attaching the connector (120c) to any other structural element of the work environment that is fixed; that which is characterising is the relative movement of the connector (120a) with respect to the opposite connector (120c).

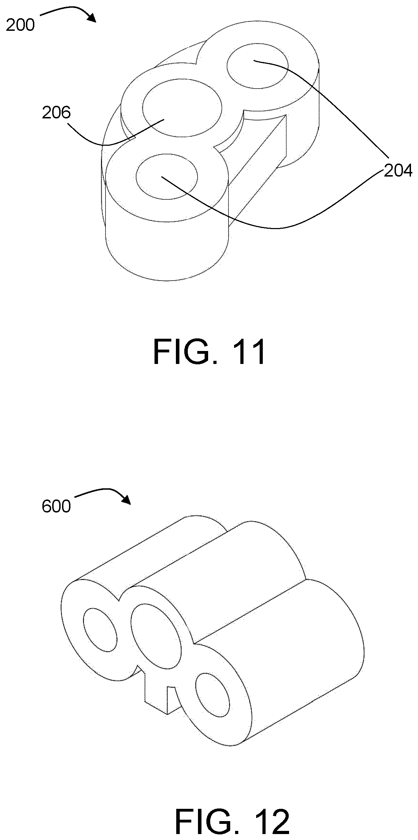

Figures 4 to 6 show that the connectors (120a-d) have holes (124), next to the corresponding access port (122a-d), for attaching a coupling (200) shown in figure 11. The purpose of this coupling (200) is to offer an alternative connection system to the pneumatic connectors that are usually found on the market.

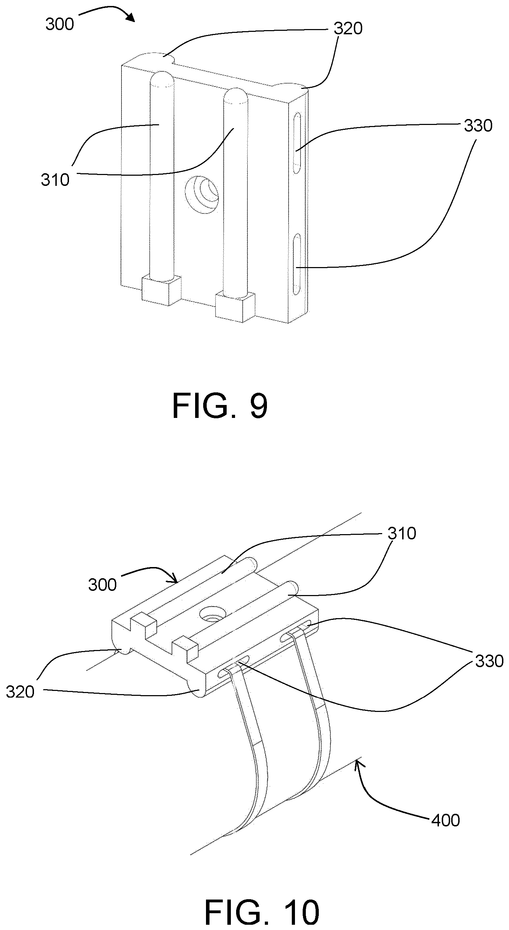

Still continuing with Figures 4 to 6, parallel longitudinal slots (126) can also be observed in one of the connectors (120a-d), preferably provided in the connector (120c), which are intended to be coupled by sliding with ribs (310) of a valve support (300), shown in Figure 9. The ribs (310) and slots (126) have a complementary contour to achieve a tight coupling. This valve support (300) also has, on the face opposite to that of the ribs (310), projections (320), which are also parallel, and which serve for attaching the support (300) to a cylinder (400) using flanges that can pass through the support (300) through a number of through holes (330) that run perpendicular to the aforementioned projections (320). This support (300) is very useful for one of the common applications of this valve (100) in relation, for example, to a double-acting cylinder (400).

With respect to the actuation of the connector (120a) by means of a mobile arm (510) of the servomechanism (500), Figure 7 clearly shows how that connector (120a) is attached to the mobile arm (510) by means of a screw which passes through a through hole (129) provided in the tab (128). It can also be deduced from the figure how it is not required for the mobile arm (510) to make a journey corresponding to an angular variation of 180° to reach the two end adjustment positions, with which a faster control of the valve (100) can be achieved.

In another alternative embodiment, not illustrated, the connector (120c) is devoid of the parallel longitudinal slots (126), but is essentially the same in construction as the connectors (120b, d). In this sense, the support (300) is devoid of the ribs (310). Therefore, to couple the valve to the cylinder (400), the connector (120c) is suitably coupled into a recess provided for this purpose in the support (300), the connector being attached by means of glue, for example. In this embodiment, the support (300) is also configured for coupling the fixed portion of the servomechanism (500). Furthermore, the support (300) is provided with a recess to enable fastening with a flange to any surface such as, for example, the cylinder of an actuator, or other similar fastening means that allow adequate fastening of the support (300).

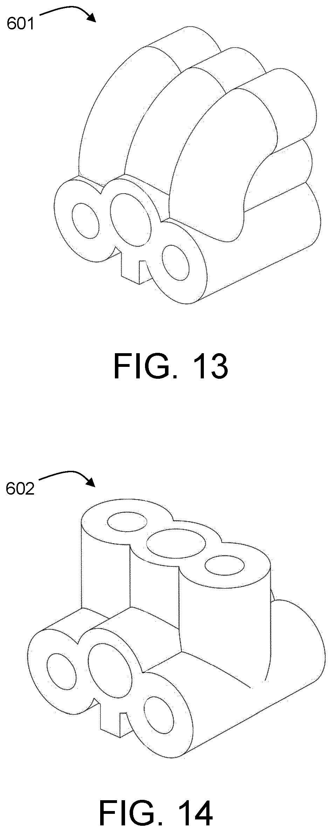

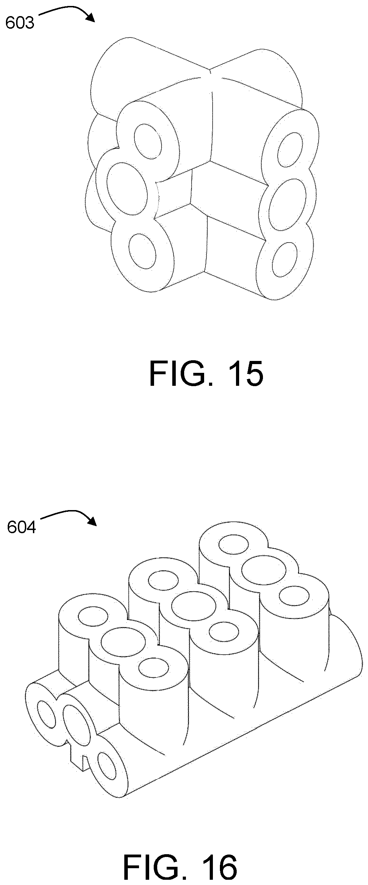

Figures 12 to 16 show examples of flow distribution junctions (600 to 604) that can be used for different configurations in which it is required to divert or distribute the fluid in one or more directions. All of these junctions (600 to 604) have the common feature of being able to be connected with the coupling (200) described above, i.e., through two holes (204) that flank the hole (206) intended for the flexible tube or conduit. Specifically, Figure 12 represents a two-way junction (600), Figure 13 represents a three-way Y-shaped junction (601), Figure 14 shows a three-way T-shaped junction (602), Figure 15 shows a four-way X-shaped junction (603) and Figure 16 shows a five-way junction (604). The connection system for connecting with the coupling (200) allows the valve (100) to be installed in smaller spaces than those required for the same system, but with the usual pneumatic connectors.

## Claims

1. A valve (100) for regulating fluid flow comprising:
- a plurality of conduits (110a, 110b, 110c, 110d), each conduit (110a, 110b, 110c, 110d) being configured to be folded for cutting off fluid flow, and unfolded for enabling fluid to flow in a controlled manner;
- a plurality of connectors (120a, 120b, 120c, 120d) intended to connect the conduits (110a, 110b, 110c, 110d) forming a circuit and configured to enable the input and output of at least one pressurised fluid to the circuit, wherein each connector (120a, 120b, 120c, 120d) couples two conduits (110a, 110b, 110c, 110d) that are independent from each other; and
- actuation means configured to move at least one of the connectors (120a, 120b, 120c, 120d) in a controlled manner, so that when said connector (102a) is moved, two conduits (110a, 110c) are unfolded at least partially, wherein one unfolded conduit (110a) is coupled to the connector (120a) that has been moved, and the other unfolded conduit (110c) is linked to one of the connectors (120c) that remains static, which enables the input of a pressurised fluid through at least one of the connectors (120c), and enables the output of a pressurised fluid through at least another one of the connectors (120a); **characterized in that** the plurality of connectors (120a, 120b, 120c, 120d) comprises an input connector (120c) provided to enable the input of the pressurised fluid, an output connector (120a) that enables the output of the pressurised fluid, a first transfer connector (120d) and a second transfer connector (120b), wherein the output connector (120a) is adapted to be moved by means of the actuation means, so that, when the output connector (120a) is moved by means of the actuation means, fluid flow is enabled between the first transfer connector (120d) or the second transfer connector (120b) and said output connector (120a), wherein the input connector (120c) remains essentially immobile, enabling fluid to move between the first transfer connector (120d) or the second transfer connector (120b), according to the movement of the output connector, so that when the output connector (120a) moves, fluid pressure at the inlet of the input connector (120c) is conducted either to the first transfer connector (120d) or to the second transfer connector (120b), and an input pressure in the other of the first transfer connector (120d) or the second transfer connector (120b) is conducted towards the output connector (120a).

2. The valve (100) according to any of the preceding claims, wherein the connectors (120a, 120b, 120c, 120d) each comprise, respectively, a port (122a, 122b, 122c, 122d) that enables fluid access and output towards the plurality of connectors (120a, 120b, 120c, 120d).

3. The valve (100) according to any of the preceding claims, wherein the actuation means comprise a servomotor (500) arranged such that a mobile portion (510) of said servomotor (500) is connected to the output connector (120a) and a fixed portion of the servomotor (500) is connected to the input connector (120c).

4. The valve (100) according to any of the preceding claims wherein each conduit (110a, 110b, 110c, 110d) is formed by at least two conduits arranged in parallel, wherein each connector (120a, 120b, 120c, 120d) has at least four respective connections for said conduits arranged in parallel.

5. The valve (100) according to any of the preceding claims wherein, in the rest position, the valve (100) is shaped as a four-pointed star, in which the four points of the star are comprised by creases (112a, 112b, 112c, 112d) that form angled segments in each conduit (110a, 110b, 110c, 110d), said creases (112a, 112b, 112c, 112d) being provided for regulating fluid flow through the conduit (110a, 110b, 110c, 110d) by the folding/unfolding thereof, and wherein each connector (120a, 120b, 120c, 120d) also comprises angled segments, each connector (120a, 120b, 120c, 120d) being arranged in each of the inside vertexes of said four-pointed star.

6. The valve (100) according to claim 5, wherein, in the rest position, the creases (112a, 112b, 112c, 112d) and the conduits (110a, 110b, 110c, 110d) form an angle between 20° and 28°, preferably 24°.

## Patentansprüche

1. Ventil (100) zur Regelung des Durchflusses eines Fluids, umfassend:
- eine Vielzahl von Leitungen (110a, 110b, 110c, 110d), wobei jede Leitung (110a, 110b, 110c, 110d) dazu konfiguriert ist, gefaltet zu werden, um den Durchfluss des Fluids zu unterbrechen, und entfaltet zu werden, um den Durchfluss des Fluids in kontrollierter Weise zu ermöglichen;
- eine Vielzahl von Verbindern (120a, 120b, 120c, 120d), die dazu bestimmt sind, die Leitungen (110a, 110b, 110c, 110d) unter Bildung eines Kreislaufs zu verbinden, und die dazu konfiguriert sind, den Eintritt und den Austritt mindestens eines Druckfluids in den Kreislauf zu ermöglichen, wobei jeder Verbinder (120a, 120b, 120c, 120d) zwei Leitungen (110a, 110b, 110c, 110d) koppelt, die voneinander unabhängig sind; und
- Betätigungsmittel, die dazu konfiguriert sind, mindestens einen der Verbinder (120a, 120b, 120c, 120d) in kontrollierter Weise zu bewegen, so dass, wenn der Verbinder (120a) bewegt wird, zwei Leitungen (110a, 110c) mindestens teilweise entfaltet werden, wobei eine entfaltete Leitung (110a) mit dem Verbinder (120a) gekoppelt ist, der bewegt worden ist, und die andere entfaltete Leitung (110c) mit einem der Verbinder (120c) verknüpft ist, der statisch bleibt, was den Eintritt eines Druckfluids durch mindestens einen der Verbinder (120c) ermöglicht und den Austritt eines Druckfluids durch mindestens einen anderen der Verbinder (120a) ermöglicht; **dadurch gekennzeichnet, dass** die Vielzahl von Verbindern (120a, 120b, 120c, 120d) einen Eintrittsverbinder (120c), der bereitgestellt wird, um den Eintritt des Druckfluids zu ermöglichen, einen Austrittsverbinder (120a), der den Austritt des Druckfluids ermöglicht, einen ersten Transferverbinder (120d) und einen zweiten Transferverbinder (120b) umfasst, wobei der Austrittsverbinder (120a) dazu angepasst ist, mittels der Betätigungsmittel bewegt zu werden, so dass, wenn der Austrittsverbinder (120a) mittels der Betätigungsmittel bewegt wird, ein Durchfluss des Fluids zwischen dem ersten Transferverbinder (120d) oder dem zweiten Transferverbinder (120b) und dem Austrittsverbinder (120a) ermöglicht wird, wobei der Eintrittsverbinder (120c) im Wesentlichen unbeweglich bleibt, wobei die Bewegung des Fluids zwischen dem ersten Transferverbinder (120d) oder dem zweiten Transferverbinder (120b) gemäß der Bewegung des Austrittsverbinders ermöglicht wird, so dass, wenn sich der Austrittsverbinder (120a) bewegt, der Fluiddruck am Einlass des Eintrittsverbinders (120c) entweder zum ersten Transferverbinder (120d) oder zum zweiten Transferverbinder (120b) geleitet wird, und ein Eintrittsdruck im anderen von dem ersten Transferverbinder (120d) oder dem zweiten Transferverbinder (120b) zu dem Austrittsverbinder (120a) geleitet wird.

2. Ventil (100) nach einem der vorhergehenden Ansprüche, wobei die Verbinder (120a, 120b, 120c, 120d) jeweils einen Anschluss (122a, 122b, 122c, 122d) umfassen, der den Zugang und den Austritt von Fluid zu der Vielzahl von Verbindern (120a, 120b, 120c, 120d) ermöglicht.

3. Ventil (100) nach einem der vorhergehenden Ansprüche, wobei die Betätigungsmittel einen Servomotor (500) umfassen, der derart angeordnet ist, dass ein beweglicher Teil (510) des Servomotors (500) mit dem Austrittsverbinder (120a) verbunden ist und ein feststehender Teil des Servomotors (500) mit dem Eintrittsverbinder (120c) verbunden ist.

4. Ventil (100) nach einem der vorhergehenden Ansprüche, wobei jede Leitung (110a, 110b, 110c, 110d) durch mindestens zwei parallel angeordnete Leitungen gebildet wird, wobei jeder Verbinder (120a, 120b, 120c, 120d) mindestens vier jeweilige Verbindungen für diese parallel angeordneten Leitungen aufweist.

5. Ventil (100) nach einem der vorhergehenden Ansprüche, wobei das Ventil (100) in der Ruheposition die Form eines vierzackigen Sterns hat, bei dem die vier Zacken des Sterns von Falzen (112a, 112b, 112c, 112d) umfasst sind, die in jeder Leitung (110a, 110b, 110c, 110d) abgewinkelte Segmente bilden, wobei die Falze (112a, 112b, 112c, 112d) bereitgestellt werden, um den Durchfluss des Fluids durch die Leitung (110a, 110b, 110c, 110d) durch das Falten/Entfalten derselben zu regulieren, und wobei jeder Verbinder (120a, 120b, 120c, 120d) ebenfalls abgewinkelte Segmente umfasst, wobei jeder Verbinder (120a, 120b, 120c, 120d) in jedem der inneren Scheitelpunkte des vierzackigen Sterns angeordnet ist.

6. Ventil (100) nach Anspruch 5, wobei in der Ruheposition die Falze (112a, 112b, 112c, 112d) und die Leitungen (110a, 110b, 110c, 110d) einen Winkel zwischen 20° und 28°, vorzugsweise 24°, bilden.

## Revendications

1. Soupape (100) pour la régulation de débit de fluide, comprenant :
- une pluralité de conduits (110a, 110b, 110c, 110d), chaque conduit (110a, 110b, 110c, 110d) étant conçu pour être plié pour couper l'écoulement de fluide, et déplié pour permettre l'écoulement du fluide d'une manière contrôlée ;
- une pluralité de raccords (120a, 120b, 120c, 120d) destinés à raccorder les conduits (110a, 110b, 110c, 110d) formant un circuit et conçus pour permettre l'entrée et la sortie d'au moins un fluide sous pression dans le circuit, dans laquelle chaque raccord (120a, 120b, 120c, 120d) accouple deux conduits (110a, 110b, 110c, 110d) qui sont indépendants l'un de l'autre ; et
- des moyens d'actionnement conçus pour déplacer au moins un des raccords (120a, 120b, 120c, 120d) d'une manière contrôlée, de sorte que lorsque ledit raccord (120a) est déplacé, deux conduits (110a, 110c) sont dépliés au moins partiellement, dans laquelle un conduit (110a) déplié est accouplé au raccord (120a) qui a été déplacé, et l'autre conduit (110c) déplié est relié à l'un des raccords (120c) qui reste statique, ce qui permet l'entrée d'un fluide sous pression à travers au moins l'un des raccords (120c), et permet la sortie d'un fluide sous pression à travers au moins un autre des raccords (120a) ; **caractérisée en ce que** la pluralité de raccords (120a, 120b, 120c, 120d) comprend un raccord d'entrée (120c) fourni pour permettre l'entrée du fluide sous pression, un raccord de sortie (120a) qui permet la sortie du fluide sous pression, un premier raccord de transfert (120d) et un second raccord de transfert (120b), dans laquelle le raccord de sortie (120a) est adapté pour être déplacé au moyen des moyens d'actionnement, de sorte que, lorsque le raccord de sortie (120a) est déplacé au moyen des moyens d'actionnement, un écoulement de fluide est permis entre le premier raccord de transfert (120d) ou le second raccord de transfert (120b) et ledit raccord de sortie (120a), dans laquelle le raccord d'entrée (120c) reste essentiellement immobile, permettant au fluide de se déplacer entre le premier raccord de transfert (120d) ou le second raccord de transfert (120b), selon le déplacement du raccord de sortie, de sorte que lorsque le raccord de sortie (120a) se déplace, une pression de fluide au niveau de l'admission du raccord d'entrée (120c) est conduite soit vers le premier raccord de transfert (120d) soit vers le second raccord de transfert (120b), et une pression d'entrée dans l'autre du premier raccord de transfert (120d) ou du second raccord de transfert (120b) est conduite vers le raccord de sortie (120a).

2. Soupape (100) selon l'une quelconque des revendications précédentes, dans laquelle les raccords (120a, 120b, 120c, 120d) comprennent chacun, respectivement, un port (122a, 122b, 122c, 122d) qui permet l'accès et la sortie de fluide vers la pluralité de raccords (120a, 120b, 120c, 120d).

3. Soupape (100) selon l'une quelconque des revendications précédentes, dans laquelle les moyens d'actionnement comprennent un servomoteur (500) agencé de telle sorte qu'une partie déplaçable (510) dudit servomoteur (500) est raccordée au raccord de sortie (120a) et qu'une partie fixe du servomoteur (500) est raccordée au raccord d'entrée (120c).

4. Soupape (100) selon l'une quelconque des revendications précédentes dans laquelle chaque conduit (110a, 110b, 110c, 110d) est formé par au moins deux conduits agencés en parallèle, dans laquelle chaque raccord (120a, 120b, 120c, 120d) a au moins quatre raccordements respectifs pour lesdits conduits agencés en parallèle.

5. Soupape (100) selon l'une quelconque des revendications précédentes dans laquelle, dans la position de repos, la soupape (100) est formée comme une étoile à quatre branches, dans laquelle les quatre branches de l'étoile sont composées par des plis (112a, 112b, 112c, 112d) qui forment des segments angulaires dans chaque conduit (110a, 110b, 110c, 110d), lesdits plis (112a, 112b, 112c, 112d) étant fournis pour réguler un débit de fluide à travers le conduit (110a, 110b, 110c, 110d) par le pliage/dépliage de ceux-ci, et dans laquelle chaque raccord (120a, 120b, 120c, 120d) comprend également des segments angulaires, chaque raccord (120a, 120b, 120c, 120d) étant agencé dans chacun des sommets intérieurs de ladite étoile à quatre branches.

6. Soupape (100) selon la revendication 5, dans laquelle, dans la position de repos, les plis (112a, 112b, 112c, 112d) et les conduits (110a, 110b, 110c, 110d) forment un angle compris entre 20° et 28°, de préférence 24°.
